# EUROPÄISCHE PATENTANMELDUNG

(11) **EP 4 700 614 A1**
(43) Veröffentlichungstag der Anmeldung: **25.02.2026**
(21) Anmeldenummer: 25187856.7
(22) Anmeldetag: 07.07.2025
(51) Int. Cl.: G06F 21/00, H05K 5/00, H05K 5/02

(54) **GEHÄUSE UND VERFAHREN ZUM SCHLIESSEN EINES GEHÄUSES**

(30) Priorität: 22.08.2024 DE 102024123984
(71) Anmelder: KNORR-BREMSE Systeme für Nutzfahrzeuge GmbH, 80809 München (DE)
(72) Erfinder: RAMMERT, Alexander, 80997 München (DE); KAUFMANN, Christian, 71701 Schwieberdingen (DE); STEGMANN, Manuel, 70193 Stuttgart (DE); SCHOLL, Frank, 74379 Ingersheim (DE); FUNK, Dominick Willi Hermann, 75239 Eisingen (DE); MATT, Alexander, 76646 Bruchsal (DE); ROTH, Matthias, 71665 Vaihingen an der Enz (DE); HERRMANN, Günter, 70569 Stuttgart (DE); ATMACA, Emirhan, 74232 Abstatt (DE)

(57) **Zusammenfassung**

Ein Gehäuse für zumindest eine Komponente (115) mit einem ersten Gehäuseteil (110) und einem zweiten Gehäuseteil (120), die miteinander verbindbar sind, um das Gehäuse zu schließen, ist offenbart. Das Gehäuse umfasst ein mechanisches Bauteil (130) mit einer ersten Verbindung (131) und einer zweiten Verbindung (132), um das mechanische Bauteil (130) im Innern des Gehäuses mit dem ersten Gehäuseteil (110) und mit dem zweiten Gehäuseteil (120) des Gehäuses zu verbinden, wobei die zweite Verbindung (132) schwächer ausgebildet ist als die erste Verbindung (131) und ein Bruch der zweiten Verbindung (132) ein Öffnen des Gehäuses anzeigt.

## Beschreibung

Die vorliegende Erfindung bezieht sich auf ein Gehäuse und ein Verfahren zum Schließen eines Gehäuses, auf ein Nutzfahrzeug mit dem Gehäuse und insbesondere auf eine Erkennung geöffneter Gehäuse durch beispielhafte Federkontakte, Drähte oder ähnliche Komponenten.

Die Cybersicherheit gewinnt zunehmend an Bedeutung, insbesondere auch Automobilbereich, wo hohe Sicherheitsstandards sicherzustellen sind. Dazu gehört, dass Elektronikkomponenten oder elektronische Systeme vor Manipulationen geschützt werden sollen. Das soll dadurch gewährleistet werden, dass Gehäuse, in denen die Elektronikkomponenten untergebracht sind, nicht leicht geöffnet werden können bzw. ein unbefugtes Öffnen zumindest festgestellt werden kann. So soll wenigstens im Nachhinein festgestellt werden, dass ein potenzieller Angreifer in das Gehäuse eingedrungen ist oder eindringen wollte. Der Angreifer kann durch das Eindringen beispielsweise bezwecken, die Funktionsweise des elektronischen Systems unerlaubt zu ändern. Zu diesen unerlaubten Änderungen zählen beispielsweise ein Tuning, ein Aufspielen einer Schadsoftware oder anderer Änderungen, die die Fahrerweise des Fahrzeuges in unerlaubter Weise ändern.

Konventionelle Vorrichtungen zum Feststellen des Öffnens eines Gehäuses sind beispielsweise das Anbringen eines Siegels oder einer Verklebung am Gerätegehäuse, die dann beim Öffnen brechen. Wenn dies im Nachhinein festgestellt wird, kann dies zum Erlöschen einer Gewährleistung oder einer Garantie führen. Dies bietet allerdings keinen Schutz vor Fehlbenutzung oder auch dem obengenannten Tuning. Im Übrigen könnten diese Siegel/Verklebungen im Nachhinein wieder repariert werden.

Andere konventionelle Lösungen nutzen sogenannte Türkontakte (z.B. in einem Deckel), die den Zugriff elektronisch melden. Aber auch für diese Maßnahmen gilt, dass potenzielle Angreifer lernen, diese offensichtlichen Maßnahmen zu umgehen.

Daher besteht ein Bedarf nach weiteren Maßnahmen, einen unerwünschten oder unerlaubten Zugriff auf ein Elektronikgehäuse zumindest zu erkennen - wenn der Zugriff auch nicht grundsätzlich ausgeschlossen werden kann.

Zumindest ein Gehäuseteil der obengenannten Probleme wird durch ein Gehäuse nach Anspruch 1 und ein Verfahren zum Schließen eines Gehäuses nach Anspruch 13 gelöst. Die abhängigen Ansprüche definieren weitere vorteilhafte Ausführungsformen der Gegenstände der unabhängigen Ansprüche.

Die vorliegende Erfindung bezieht sich auf ein Gehäuse für zumindest eine Komponente. Das Gehäuse umfasst ein erstes Gehäuseteil und ein zweites Gehäuseteil, die miteinander verbindbar sind, um das Gehäuse zu schließen. Das Gehäuse umfasst weiter ein mechanisches Bauteil mit einer ersten Verbindung und einer zweiten Verbindung, um das mechanische Bauteil im Innern des Gehäuses mit dem ersten Gehäuseteil und mit dem zweiten Gehäuseteil des Gehäuses zu verbinden. Die zweite Verbindung ist schwächer ausgebildet als die erste Verbindung und ein Bruch der zweiten Verbindung zeigt ein Öffnen des Gehäuses an.

Es versteht sich, dass die erste und/oder die zweite Verbindung(en) direkt oder indirekt (z.B. über Leiterplatte) ausgebildet sein können, um beide Gehäuseteile über das mechanische Bauteil zu verbinden (direkt oder indirekt). Außerdem kann die schwächer ausgebildete zweite Verbindung als ein Sollbruchstelle gebildet sein und möglichst unsichtbar ausgestaltet werden. Die Komponente kann beispielsweise zumindest eine elektronische Komponente aufweisen. Sie kann z.B. ein Leiterplatte mit elektrischen Bauteilen sein.

Optional ist das mechanische Bauteil ein Federkontakt zwischen dem zweiten Gehäuseteil und der zumindest einen Komponente. Die zweite Verbindung kann zumindest eines aus dem Folgenden sein oder umfassen: eine Schweißverbindung, Lötverbindung, Klebverbindung. Die erste Verbindung kann beispielsweise die Komponente kontaktieren bzw. daran befestigte sein.

Optional umfasst das Gehäuse einen Detektor, der ausgebildet ist, um ein elektrisches Signal durch das mechanische Bauteil zu senden und aus einer Änderung des elektrischen Signals ein Öffnen des Gehäuses zu signalisieren. Beispielsweise kann das mechanische Bauteil ein Metall aufweisen und Teil einer Signalleitung sein, die auf einer Seite fest mit dem ersten Gehäuseteil und auf einer anderen Seite fest mit dem zweiten Gehäuseteil verbunden ist, sodass beim Öffnen des Gehäuses die Signalleitung unterbrochen wird. Der Detektor kann ein Signal über die Signalleitung senden und aus einer gebrochenen Signalleitung auf das Öffnen des Gehäuses schließen.

Ausführungsbeispiele beziehen sich auch auf ein (weiteres) Gehäuse für zumindest eine Komponente mit einem ersten Gehäuseteil und einem zweiten Gehäuseteil, die miteinander verbindbar sind, um das Gehäuse zu schließen. Das (weitere) Gehäuse umfasst einen Detektor für ein elektromagnetisches Signal innerhalb des Gehäuses, wobei der Detektor ausgebildet ist, um aus einer Änderung des elektromagnetischen Signals ein Öffnen des Gehäuses zu signalisieren.

Optional ist das elektromagnetische Signal zumindest eines aus dem Folgenden: sichtbares Licht, infrarot Signal, eine elektrische Spannung, ein elektrisches Signal, ein magnetisches Signal, eine Kapazität (Änderung eines Abstandes ändert die Kapazität), eine elektromagnetische Welle (z.B. ein Funksignal).

Optional umfasst der Detektor eine erste Detektorkomponente und eine zweite Detektorkomponente, zwischen denen das elektromagnetische Signal sich ausbreitet. Eine der Detektorkomponenten ist fest mit dem ersten Gehäuseteil und die andere fest mit dem zweiten Gehäuseteil verbunden. Die erste Detektorkomponente und/oder die zweite Detektorkomponente umfassen zumindest eines aus dem Folgenden aufweisen:
- eine Strahlungsquelle und eine Photodiode (z.B. zum Empfangen eines Signals der Strahlungsquelle, sodass der Detektor aus einer Änderung des empfangenen Signals auf das Öffnen des Gehäuses schließen kann),
- einen Hochfrequenz-Identifikations-, RFID-, Transponder und ein RFID-Lesegerät (z.B. eines davon kann auf oder in dem ersten Gehäuseteil und das andere kann auf oder in dem zweiten Gehäuseteil oder auf der Komponente gebildet sein, sodass eine relative Bewegung zwischen beiden einen Ausleseprozess des Transponders startet und der Detektor daraus auf ein Öffnen des Gehäuses schließt),
- einen Hallsensor und einen Magneten (z.B. kann eines davon auf oder in dem ersten Gehäuseteil und das andere davon auf oder in dem zweiten Gehäuseteil oder der Komponente gebildet sein, sodass der Detektor aus einer Änderung eines Sensorsignals des Hallsensors auf das Öffnen des Gehäuses schließt).

Optional umfasst der Detektor (nur) eine Photodiode zum Empfangen eines Signals (z.B. Licht) von einer Umgebung des Gehäuses, wenn das Gehäuse geöffnet wird. Wiederum kann der Detektor aus einer Änderung eines Sensorsignals der Photodiode auf das Öffnen des (weiteren) Gehäuses schließen.

Optional umfasst der Detektor einen Datenspeicher und ist ausgebildet, um auf ein detektiertes Öffnen des Gehäuses eine Warnung auszugeben oder eine Information über das Öffnen im Datenspeicher zu speichern (z.B. kann ein Flag gesetzt werden).

Optional umfasst die Komponente eine Funktionskomponente für eine vorbestimmte Funktion, wobei die vorbestimmte Funktion auf die Warnung oder die gespeicherte Information sich ändern kann (bzw. nicht mehr zur Verfügung steht).

Optional ist der Detektor unsichtbar in dem Gehäuse gebildet (z. B. eingebettet in ein Material des Gehäuses und/oder der Komponente in dem Gehäuse).

Optional ist das erste Gehäuseteil ein Bodenelement mit einer daran befestigten Leiterplatte als Komponente. Optional ist das zweite Gehäuseteil ein Deckelelement zum Schließen des Bodenelementes.

Ausführungsbeispiele beziehen sich auch auf ein Nutzfahrzeug (z.B. ein Lastkraftwagen oder Bus) mit einem zuvor definierten Gehäuse. Das Gehäuse kann ein Fahrzeugsteuergerät beherbergen.

Ausführungsbeispiele beziehen sich auch auf ein Verfahren zum Schließen eines Gehäuses für zumindest einer Komponente. Das Verfahren umfasst:
- Bereitstellen eines ersten Gehäuseteils und eines zweiten Gehäuseteils;
- Schließen des Gehäuses durch ein Aneinanderfügen des ersten Gehäuseteils und des zweiten Gehäuseteils; und
- Fixieren eines mechanischen Bauteils an das erste Gehäuseteil und über eine Sollbruchstelle an das zweite Gehäuseteil im Innern des Gehäuses, sodass ein Öffnen des Gehäuses zu einem Bruch der Sollbruchstelle führt.

Optional umfasst der Schritt des Fixierens zumindest eines der folgenden Befestigungen: Schweißen, Löten, Verkleben, wobei beispielsweise Folgendes ausgeführt werden kann: Ultraschallschweißen, elektrisches Aufheizen, punktuelles Aufheizen, Aufbringen von Kleber und Aushärten des Klebers nach dem Schließen des Gehäuses.

Es versteht sich, dass alle zuvor beschriebenen optionalen Komponenten der Gehäuse bei der Herstellung eines geschlossenen Gehäuses als weitere optionale Verfahrensschritte ausgeführt werden können. Außerdem versteht es sich, dass die Reihenfolge der Nennung nicht notwendigerweise eine Reihenfolge bei der Ausführung der Verfahrensschritte bedeutet. Die Schritte können auch in einer anderen Reihenfolge ausgeführt werden oder es wird nur ein Teil der Verfahrensschritte ausgeführt.

Ausführungsbeispiele weisen eine Vielzahl von Vorteilen auf. So wird zumindest ein Teil der obengenannten Probleme dadurch gelöst, dass Komponenten (z.B. das mechanische Bauteil oder der Detektor) oder Teile davon nahezu unsichtbar ausgebildet werden können, die ein Öffnen des Gehäuses feststellen und entsprechende Meldungen ausgeben können. So mag zwar die mechanische Komponente nach dem Öffnen erkennbar sein, nicht aber der Bruch einer festen Verbindung der mechanischen Komponente an dem ersten und/oder dem zweiten Gehäuseteil.

Ausführungsbeispiele können verschiedene Arten von Sensoren verwenden, die auf unterschiedlichen technischen Prinzipien basieren. Diese Sensoren können unterteilt werden in einerseits aktive Sensoren (z.B. bestromt) und passive Sensoren (nicht bestromt) bzw. elektronische und nicht-elektronische Sensoren. Zu den nichtelektronischen Sensoren zählen beispielsweise mechanische Vorkehrungen, die ein Öffnen des Gehäuses feststellen. Zu den aktiven elektronischen Sensoren zählen beispielsweise Sensoren, die ein elektrisches Signal übertragen und ein Öffnen des Gehäuses an einer Änderung des elektrischen Signals feststellen. Zu den passiven elektronischen Sensoren zählen beispielsweise solche Sensoren, die nach einem Öffnen des Gehäuses ein einfallendes Licht detektieren und basierend darauf das Öffnen des Gehäuses feststellen.

Ausführungsbeispiele nutzen insbesondere Detektionseinrichtungen oder einen Detektor, der ein Öffnen des Gehäuses nicht nur anzeigen kann, sondern auch einen Betrieb nach einem unerlaubten Öffnen oder einer etwaigen Modifikation unterbindet oder limitiert oder eine Überwachung veranlasst. So könnten beispielsweise hochsensible Funktionen (z.B. das autonome Fahren) nach dem Feststellen eines unautorisierten Öffnens der dazugehörigen Steuereinrichtung pausiert werden. Der Fahrer könnte diesen Modus erst wieder aktivieren, wenn eine entsprechende Überprüfung durchgeführt wurde.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Gehäuse gemäß einem Ausführungsbeispiel der vorliegenden Erfindung.
- Fig. 2: zeigt ein weiteres Gehäuse gemäß weiteren Ausführungsbeispielen.
- Fig. 3: zeigt ein schematisches Flussdiagramm für ein Verfahrung zum Schließen eines Gehäuses gemäß Ausführungsbeispielen.

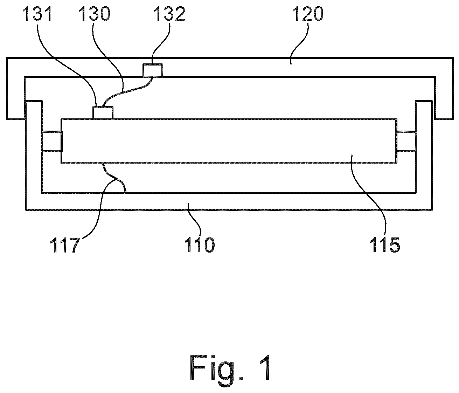

**Fig. 1** zeigt ein Ausführungsbeispiel für ein Gehäuse für eine Komponente 115. Das Gehäuse umfasst ein erstes Gehäuseteil 110 und ein zweites Gehäuseteil 120, die miteinander verbindbar sind, um das Gehäuse, wie dargestellt, zu schließen. Das Gehäuse umfasst weiter ein mechanisches Bauteil 130, welches eine Verbindung zwischen dem ersten Gehäuseteil 110 und dem zweiten Gehäuseteil 120 herstellt. Die Komponente 115 kann eine Leiterplatte oder ein elektronisches Bauteil sein oder diese aufweisen. Die Komponente 115 kann fest mit dem ersten Gehäuseteil 110 verbunden sein. Das mechanische Bauteil 130 verbindet somit indirekt das erste Gehäuseteil 110 mit dem zweiten Gehäuseteil 120 (über die Komponente115). Die Komponente 115 kann insbesondere eine Komponente umfassen, die eine bestimmte Funktion im Fahrzeug steuert (z.B. als ein Fahrzeugsteuergerät).

Gemäß Ausführungsbeispielen ist das mechanische Bauteil 130 eine Feder oder hat eine Federwirkung, die die beispielhafte Komponente 115 in vertikaler Richtung gegen das erste Gehäuseteil 110 drückt. Dadurch wird ein fester Halt der Komponente 115 sicherstellt. Das mechanische Bauteil 130 kann eine erste Verbindung 131 und eine zweite Verbindung 132 aufweisen, wobei die zweite Verbindung 132 eine feste Verbindung zu dem zweiten Gehäuseteil 120 liefert (z.B. durch Punktschweißen oder Löten oder Kleben) und die erste Verbindung 131 das mechanische Bauteil 130 an die Komponente 115 oder an das erste Gehäuseteil 110 fest koppelt.

Gemäß Ausführungsbeispielen kann die zweite Verbindung 132 eine Sollbruchstelle liefern. Um dies zu gewährleisten, kann die erste Verbindung 131 mit der Komponente 115 fest verbunden sein oder dort einhaken, wobei die Verbindung mit der Komponente 115 stärker ausgebildet sein kann als die zweite Verbindung 132 mit dem zweiten Gehäuseteil 120. Daher bricht beim Öffnen des Gehäuses dies zweite Verbindung 132 zu dem zweiten Gehäuseteil 120 - nicht aber die erste Verbindung 131 zu der Komponente 115 (oder zu dem ersten Gehäuseteil 110). Der Bruch der Sollbruchstelle 132 kann später festgestellt werden, auch wenn das Gehäuse zwischenzeitlich wieder geschlossen wurde. Somit können unerlaubte Zugriffe auf die im Gehäuse vorhandenen Komponenten 115 im Nachhinein festgestellt werden. Die Feststellung kann auch ohne ein erneutes Öffnen erfolgen. So können beispielsweise bildgebende Verfahren wie Röntgen- oder Ultraschalluntersuchungen genutzt werden, um den Bruch der Sollbruchstelle auch ohne Öffnen festzustellen.

Vorteilhafterweise ist der Bruch der Sollbruchstelle 132 nicht sofort erkennbar. Hierzu kann die zweite Verbindung 132 zwischen der mechanischen Komponente 130 und dem zweiten Gehäuseteil 120 entsprechend klein ausgebildet werden (z.B. eine Fläche einnehmen von weniger als 1 mm im Durchmesser), sodass beispielsweise mikroskopische Untersuchungen durchgeführt werden müssten, um die vorhandene Sollbruchstelle 132 zu erkennen. Ein potenzieller Angreifer wird nicht ohne weiteres feststellen können, dass eine feste Verbindung 132 zwischen dem mechanischen Bauteil 130 und dem zweite Gehäuseteil 120 (z.B. Deckel) überhaupt existiert hat. Andererseits könnte aber über Ultraschalluntersuchungen oder Röntgen oder durch elektrische Messungen vor dem Öffnen des Gehäuses festgestellt werden, ob die zweite Verbindung 132 zwischen der mechanischen Komponenten 130 und dem zweiten Gehäuseteil 120 gebrochen wurde (z.B. durch ein unerlaubtes Öffnen).

Gemäß weiteren Ausführungsbeispielen kann das Gehäuse bestromt sein. Bestromte Gehäuse können entweder an einer externen Stromquelle angeschlossen sein (über optionale Anschlusskontakte oder Anschlussstecker, nicht gezeigt in Fig. 1) oder eine eigene Batterie aufweisen. Wenn das Gehäuse bestromt ist, kann durch das mechanische Bauteil 130 ein elektrischer Strom geschickt werden, der beim Öffnen des Gehäuses unterbricht und ein entsprechendes Signal ausgibt. Ausführungsbeispiele umfassen daher einen optionalen Detektor, der ausgebildet ist, um das Signal durch das mechanische Bauteil 130 festzustellen und (z.B. bei Unterbrechung) eine Warnung ausgegeben bzw. als eine Information in einem Speicher zu speichern (z.B. eine Markierung oder einen Flag zu setzen). Dies könnte dazu führen, dass die Komponente 115 oder eine Funktionskomponente in dem Gehäuse eine andere Funktionsweise zeigt, als dies zuvor der Fall war. Beispielsweise kann das nichtautorisierte Öffnen zum Deaktivieren bestimmter Funktionen führen, um so Manipulationen sicher auszuschließen. Beispielsweise kann ein autonomes Fahren erschwert oder unmöglich gemacht werden, falls nicht ausgeschlossen werden, dass ein potentieller Angreifer Zugriff auf die Steuerelektronik bekommen hat.

Das erste Gehäuseteil 110 kann beispielsweise ein Metall (z.B. Aluminiumguss) aufweisen. In diesem Fall kann ein optionaler Massekontakt 117 vorgesehen sein, der eine Rückseite der Komponente115 beispielsweise mit dem ersten Gehäuseteil 110 verbindet. Das zweite Gehäuseteil 120 kann einen Deckel bilden und auch ein Metall aufweisen. Es kann aber auch aus einem Kunststoffmaterial (z.B. Polyamid) gefertigt sein.

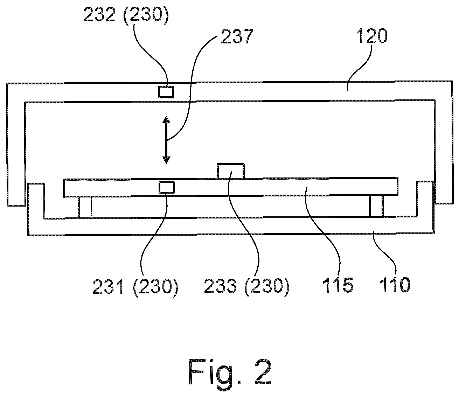

**Fig. 2** zeigt weitere Details eines bestromten Gehäuses, wie sie gemäß Ausführungsbeispielen vorhanden sein können. Das bestromte Gehäuse weist entweder eine eigene Spannungsquelle (z.B. Batterie, Akku) auf oder wird an eine externe Spannungsquelle über einen Anschluss angeschlossen. Die externe Spannungsquelle kann beispielsweise eine Batterie des beispielhaften Fahrzeuges (z.B. Nutzfahrzeug oder LKW) sein.

Gemäß diesem Ausführungsbeispiel umfasst das Gehäuse wiederum ein erstes Gehäuseteil 110, ein zweites Gehäuseteil 120 und einen Detektor 230. Der Detektor 230 kann beispielhaft auf oder in der Komponente 115 angeordnet sein. Der Detektor 230 kann insbesondere auch vollständig in die Komponente 115 eingebettet sein (z.B. in eine Leiterplatte eingegossen sein), so dass dessen Existenz nach einem Öffnen des Gehäuses nicht sichtbar zu sein braucht.

Optional umfasst der Detektor eine erste Detektorkomponente 231, eine zweite Detektorkomponente 232 und einen optionalen Datenspeicher 230. Die erste Detektorkomponente 231 und/oder die zweite Detektorkomponente kann/können zumindest eines aus dem Folgenden umfassen oder sein: eine Leuchtdiode, eine Photodiode, eine Strahlungsquelle, ein RFID-Chip, ein Hall-Sensor, ein Spiegel, ein Magnet. Die erste oder zweite Detektorkomponente 231, 232, kann als ein aktives Bauteil sein und die jeweils andere ein passives Bauteil sein. Beispielsweise kann die zweite Detektorkomponente 232 als passives Bauteil in dem zweiten Gehäuseteil 120 eingegossen oder eingebettet sein (z.B. wenn es ein Kunststoff aufweist), sodass es nach einem Öffnen des Gehäuses nicht sichtbar ist. Ein oder mehrere Detektionsergebnisse kann in dem Datenspeicher 230 protokolliert werden.

Gemäß Ausführungsbeispielen erfolgt zwischen der ersten Detektorkomponente 231 und der zweiten Detektorkomponente 232 ein Austausch eines elektromagnetischen Signals 237. Das elektromagnetische Signal 237 kann beispielsweise ein Lichtsignal, ein Infrarotsignal, ein magnetisches Signal, ein Radiofrequenzsignal (Funksignal) oder ein anderes elektromagnetisches Signal umfassen, welches es dem Detektor 230 erlaubt, aus einer Änderung des Signals ein Öffnen des Gehäuses festzustellen.

Gemäß Ausführungsbeispielen kann die erste Detektorkomponente 231 und die zweite Detektorkomponente 232 jeweils ein RFID-Chip umfassen, wovon einer in dem zweiten Gehäuseteil 120 (Deckel) eingebettet ist und der andere RFID-Chip in oder an dem ersten Gehäuseteil 110 oder der Komponente 115 angebracht ist (er könnte auch dort unsichtbar integriert sein). Das Gehäuse kann beispielsweise ein dielektrisches Material aufweisen, so dass eine entsprechende Signalausbreitung zwischen den beiden RFID-Chips ohne Probleme möglich ist. Einer der RFID-Chips kann ein Transponder und der andere ein dazugehöriges Lesegerät sein. In diesem Fall ist das elektromagnetische Signal 237 das Transpondersignal.

Gemäß Ausführungsbeispielen ist die erste Detektorkomponente 231 eine Strahlungsquelle und die zweite Detektorkomponente 232 eine Photodiode. Die zweite Detektorkomponente 232 kann auch ein Spiegel sein, wobei dann ein Photodiode auf zusätzlich auf der Komponente 115 ausgebildet ist. Der Detektor 230 kann aus einer Änderung des empfangenen Signals auf das Öffnen des Gehäuses schließen.

Gemäß Ausführungsbeispielen umfasst der Detektor 230 (nur) eine zum Empfangen eines Signals (z.B. Licht) von einer Umgebung des Gehäuses, wenn das Gehäuse geöffnet wird. Wiederum kann der Detektor 230 aus einer Änderung eines Sensorsignals der Photodiode auf das Öffnen des (weiteren) Gehäuses schließen.

Gemäß Ausführungsbeispielen umfasst der Detektor 230 einen Hallsensor als erste Detektorkomponente 231 und einen Magneten als zweiten Detektorkomponente 232. Der Detektor 230 kann in diesem Fall aus einer Änderung eines Sensorsignals des Hallsensors auf das Öffnen des Gehäuses schließen. In diesem Fall ist das elektromagnetische Signal 237 eine Änderung des Magnetfeldes vom Magneten 232 in dem beispielhaften Deckel 120.

Gemäß Ausführungsbeispielen kann der Detektor 230 einen Kondensator bilden, der seine Kapazität beim Öffnen ändert. So kann die erste Detektorkomponente 231 eine erste Kondensatorelektrode sein und die zweite Detektorkomponente 231 eine zweite Kondensatorelektrode sein, die sich beim Öffnen voneinander wegbewegen und so ein Detektionssignal verursachen können.

Vorteilhafterweise ist der Detektor 230 bzw. dessen einzelnen Komponenten 231, 232 so angeordnet, dass sie für einen Eindringling oder potenziellen Angreifer nach einem Öffnen des Gehäuses nicht ohne weiteres erkennbar sind. Das kann z.B. dadurch erreicht werden, dass die Detektorkomponenten 231, 232 in das Material der Gehäuseteile 110, 120 oder der Komponente 115 eingebettet sind (z.B. eingeschmolzen in ein Polymermaterial).

Gemäß Ausführungsbeispielen kann das Öffnen des Gehäuses zu einer Änderung des Verhaltens des betreffenden Gerätes (z.B. der Funktionskomponente im Gehäuse) führen. Alternativ oder zusätzlich kann eine Warnung (z.B. in Echtzeit an ein externes Gerät) ausgegeben werden oder in einen Datenspeicher 233 erfasst und später (z.B. in eine Werkstatt) ausgelesen werden. Damit kann festgestellt, ob eine Manipulation eventuell vorgenommen wurde.

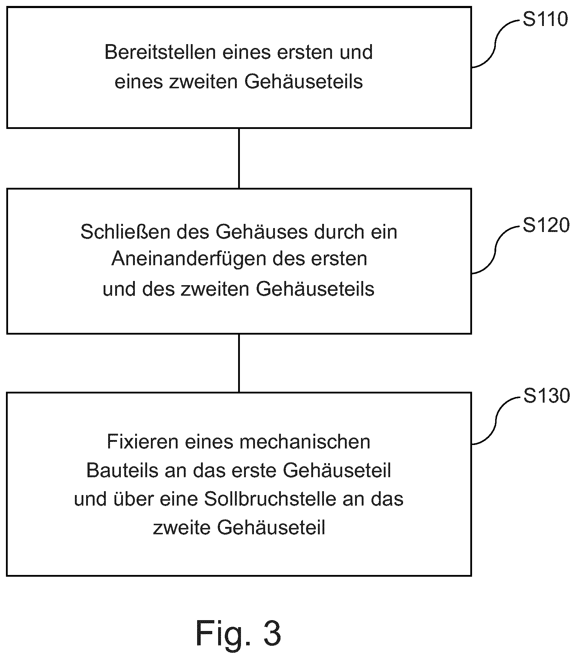

**Fig. 3** zeigt ein schematisches Flussdiagramm für ein Verfahrung zum Schließen eines Gehäuses gemäß Ausführungsbeispielen. Das Verfahren umfasst die Schritte:
- Bereitstellen S110 eines ersten Gehäuseteils 110 und eines zweiten Gehäuseteils 120;
- Schließen S120 des Gehäuses durch ein Aneinanderfügen des ersten Gehäuseteils 110 und des zweiten Gehäuseteils 120; und
- Fixieren S130 eines mechanischen Bauteils 130 an das erste Gehäuseteil 110 und über eine Sollbruchstelle 132 an das zweite Gehäuseteil 120 im Innern des Gehäuses, sodass ein Öffnen des Gehäuses zu einem Bruch der Sollbruchstelle 132 führt.

Das Fixieren kann ein Schweißen, Löten oder Verkleben umfassen. Insbesondere kann dieser Schritt nach dem Schließen des Gehäuses durchgeführt werden. Wenn andererseits das mechanische Bauteil 130 auch den dem ersten Gehäuseteil 110 fest fixiert ist (z.B. auch durch ein Schweißen, Löten oder Verkleben), kann das Gehäuse nur noch geöffnet werden, wenn zumindest eine dieser Verbindungen 131, 132 gebrochen wird. Vorzugsweise kann dies die Verbindung 132 zu dem zweiten Gehäuseteil 120 sein. Das kann dadurch erreicht werden, dass diese zweite Verbindung 132 als Sollbruchstelle ausgebildet wird (z.B. schwächer oder kleiner ausgebildet wird als die erste Verbindung 231). Dies bietet den Vorteil, dass ein optionales Prüfen vor einem Öffnen des Gehäuses durchgeführt kann. Hierzu können nicht-invasive Materialuntersuchungen durchgeführt werden (z.B. Ultraschall, Röntgen, elektrische Messung), um einen Bruch der zweiten Verbindung 132 an dem beispielhaften Deckel (zweites Gehäuseteil) festzustellen.

Wesentliche Aspekte der Ausführungsbeispiel können wie folgt zusammengefasst werden. Ausführungsbeispiele können in zwei Gruppen unterteilt werden:
(1) bestromte Gehäuse (z.B. umfassen eine Batterie oder sind mit einer Fahrzeugbatterie verbunden);
(2) unbestromte Gehäuse.

Zur Gruppe (1) gehören beispielsweise die Ausführungsbeispiele, die ein Öffnen des Gehäuses mittels einem Photosensor detektieren, um Fremdlicht (von außerhalb des Gehäuses) bei offenem Gehäuse zu erkennen. Eine weitere Möglichkeit für bestromte Geräte ist das Vorhandensein einer Photodiode und einer Leuchtdiode, die ein spezielles Lichtspektrum überträgt, so dass wiederum Fremdlicht als eine Störung des übertragenen Lichtspektrums erkennbar wird. Eine weitere Möglichkeit in dieser Gruppe besteht in der Verwendung eines Hall-Sensors, der beispielsweise auf einer Leiterplatte verlötet sein kann, und eines Magneten, der beispielsweise unsichtbar in dem zweiten Gehäuseteil 120 eingegossenen ist (z.B. in dem entfernbaren Deckel). Wenn der Deckel 120 geöffnet wird, führt die Änderung des Magnetfeldes zu einer Änderung des Signals des Hall-Sensors, welche wiederum als ein Öffnen des Gehäuses erfasst werden kann. Die Auswertung der bestromten Gruppe von Gehäusen kann durch einen vorhandenen Mikrokontroller durchgeführt werden.

Zur Gruppe (2) von Ausführungsbeispielen gehören Gehäuse, die keinen Zugang zu einer Stromquelle haben oder sich den erforderlichen Strom selbst erzeugen. Hierzu gehört beispielsweise genannte RFID-Chips (z.B. Transponder, Lesegerät), die beispielsweise unsichtbar in einer Leiterplatte 115 eingebracht (z.B. eingegossen) bzw. in dem Deckel (zweiter Gehäuseteil 120) unsichtbar angeordnet sein können. Durch eine relative Bewegung der beiden Detektorkomponenten 131, 132 erzeugen diese ihren eigenen Strom (z.B. durch Induktion), um ein Detektionssignal auszulösen. Vorteilhafterweise erkennt ein potenzieller Angreifer (Eindringling) nicht, dass Schutzmaßnahmen vorgesehen sind, so dass keine Gegenmaßnahmen ergriffen oder erlernt werden. Eine weitere Ausführungsform zum Schutz von unbestromten Gehäusen besteht darin, ein mechanisches Bauteil 130 mit einer Sollbruchstelle 132 in dem Gehäuse anzuordnen. Auch hier kann die Sollbruchstelle 132 als solche nicht erkennbar sein (z.B. sehr klein ausgebildet werden). So kann beispielsweise ein Federkontakt, der auf dem ersten Blick wie eine Einspannvorrichtung für die beispielhafte Leiterplatte 115 aussieht, beispielhaft mit einem Ultraschweißverfahren fest mit dem Deckel verbunden werden. Das kann z.B. nach dem Schließen des Gehäuses erfolgen. Beim späteren Öffnen des Gehäuses wird der (kleine) Schweißkontakt abreißen, ohne dass dies sofort erkennbar ist. Der Federkontakt kann als eine Vorspanneinrichtung getarnt sein, die nach einem unerlaubten Öffnen und Schließen weiterhin funktioniert.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 110: erstes Gehäuseteil
- 115: zumindest eine Komponente (z.B. Leiterplatte, Funktionskomponente)
- 117: Masseanschluss
- 120: zweites Gehäuseteil
- 130: mechanisches Bauteil
- 131: erste Verbindung
- 132: zweite Verbindung (z.B. Sollbruchstelle)
- 230: Detektor
- 231: erste Detektorkomponente
- 232: zweite Detektorkomponente
- 237: elektromagnetisches Signal (Detektionssignal)
- 233: Datenspeicher

## Patentansprüche

1. Gehäuse für zumindest eine Komponente (115) mit einem ersten Gehäuseteil (110) und einem zweiten Gehäuseteil (120), die miteinander verbindbar sind, um das Gehäuse zu schließen,
**gekennzeichnet durch**
ein mechanisches Bauteil (130) mit einer ersten Verbindung (131) und einer zweiten Verbindung (132), um das mechanische Bauteil (130) im Innern des Gehäuses mit dem ersten Gehäuseteil (110) und mit dem zweiten Gehäuseteil (120) des Gehäuses zu verbinden, wobei die zweite Verbindung (132) schwächer ausgebildet ist als die erste Verbindung (131) und ein Bruch der zweiten Verbindung (132) ein Öffnen des Gehäuses anzeigt.

2. Gehäuse nach Anspruch 1, wobei das mechanische Bauteil (130) ein Federkontakt zwischen dem zweiten Gehäuseteil (120) und der Komponente (115) ist und die zweite Verbindung (132) zumindest eines aus dem Folgenden ist: eine Schweißverbindung, Lötverbindung, Klebverbindung.

3. Gehäuse nach Anspruch 1 oder Anspruch 2, das weiter einen Detektor (230) umfasst, der ausgebildet ist, um ein elektrisches Signal durch das mechanische Bauteil (130) zu senden und aus einer Änderung des elektrischen Signals ein Öffnen des Gehäuses zu signalisieren.

4. Gehäuse für zumindest eine Komponente (115) mit einem ersten Gehäuseteil (110) und einem zweiten Gehäuseteil (120), die miteinander verbindbar sind, um das Gehäuse zu schließen,
**gekennzeichnet durch**
einen Detektor (230) für ein elektromagnetisches Signal (237) innerhalb des Gehäuses, wobei der Detektor (230) ausgebildet ist, um aus einer Änderung des elektromagnetischen Signals (237) ein Öffnen des Gehäuses zu signalisieren.

5. Gehäuse nach Anspruch 4, wobei das elektromagnetische Signal (237) zumindest eines aus dem Folgenden ist: sichtbares Licht, Infrarot-Signal, eine elektrische Spannung, ein elektrisches Signal, ein magnetisches Signal, eine Kapazität, eine elektromagnetische Welle.

6. Gehäuse nach Anspruch 4 oder Anspruch 5, wobei der Detektor (230) eine erste Detektorkomponente (231) und eine zweite Detektorkomponente (231) aufweist, zwischen denen das elektromagnetische Signal (237) sich ausbreitet und eine davon fest mit dem ersten Gehäuseteil (110) und die andere fest mit dem zweiten Gehäuseteil (120) verbunden ist, wobei die erste Detektorkomponente (231) und die zweite Detektorkomponente (231) zumindest eines aus dem Folgenden aufweisen:
- eine Strahlungsquelle und eine Photodiode,
- einen Hochfrequenz-Identifikations-, RFID-, Transponder und ein RFID-Lesegerät,
- einen Hallsensor und einen Magneten.

7. Gehäuse nach einem der Ansprüche 4 bis 6, wobei der Detektor (230) eine Photodiode zum Empfangen eines Signals von einer Umgebung des Gehäuses aufweist, wenn das Gehäuse offen ist.

8. Gehäuse nach einem der Ansprüche 3 bis 7, wobei der Detektor (230) einen Datenspeicher (233) aufweist und ausgebildet ist, um auf ein detektiertes Öffnen des Gehäuses eine Warnung auszugeben oder eine Information über das Öffnen im Datenspeicher zu speichern.

9. Gehäuse nach Anspruch 8, wobei die Komponente (115) eine Funktionskomponente für eine vorbestimmte Funktion aufweist, die ausgebildet ist, um die vorbestimmte Funktion auf die Warnung oder die gespeicherte Information zu ändern.

10. Gehäuse nach einem der Ansprüche 3 bis 9, wobei der Detektor (230) unsichtbar in dem Gehäuse ausgebildet ist.

11. Gehäuse nach einem der vorhergehenden Ansprüche, wobei das erste Gehäuseteil (110) ein Bodenelement mit einer daran befestigte Leiterplatte als Komponente (115) ist und das zweite Gehäuseteil (120) ein Deckelelement zum Schließen des Bodenelementes (110) ist.

12. Nutzfahrzeug mit einem Gehäuse nach einem der vorhergehenden Ansprüche.

13. Verfahren zum Schließen eines Gehäuses für zumindest eine Komponente (115) mit folgenden Schritten:
- Bereitstellen (S110) eines ersten Gehäuseteils (110) und eines zweiten Gehäuseteils (120);
- Schließen (S120) des Gehäuses durch ein Aneinanderfügen des ersten Gehäuseteils (110) und des zweiten Gehäuseteils (120); und
- Fixieren (S130) eines mechanischen Bauteils (130) an das erste Gehäuseteil (110) und über eine Sollbruchstelle (132) an das zweite Gehäuseteil (120) im Innern des Gehäuses, sodass ein Öffnen des Gehäuses zu einem Bruch der Sollbruchstelle (132) führt.

14. Verfahren nach Anspruch 13, wobei der Schritt des Fixierens zumindest eines der folgenden Befestigungen umfasst: Schweißen, Löten, Verkleben.
